Europäisches Patentamt

European Patent Office

Office européen des brevets

(11) Numéro de publication: **0 002 153**
**A1**

# DEMANDE DE BREVET EUROPEEN

(21) Numéro de dépôt: **78400175.2**

(22) Date de dépôt: **13.11.78**

(51) Int. Cl.²: **G 01 T 1/28, H 01 J 39/36**

(30) Priorité: **15.11.77 FR 7734271**
**23.11.77 FR 7735185**

(43) Date de publication de la demande: **30.05.79**
**Bulletin 79/11**

(84) Etats contractants désignés: **CH DE GB**

(71) Demandeur: **COMMISSARIAT A L'ENERGIE ATOMIQUE, B.P. 510, F-75752 Paris Cedex 15 (FR)**

(84) Etats contractants désignés: **CH DE GB**

(71) Demandeur: **GESELLSCHAFT Für STRAHLEN- UND UMWELTFORSCHUNG M.B.H., Ingolstädter Landstrasse 1 Post Oberschleissheim, D-8042 Neuherberg (DE)**

(84) Etats contractants désignés: **CH DE GB**

(72) Inventeur: **Eloy, Jean-François, Labis de Dessous, F-38330 Saint Ismier (FR)**
Inventeur: **Unsold, Eberhard, Mohrstrasse 6, D-8000 München 45 (DE)**

(74) Mandataire: **Mongredien, André et al, c/o Brevatome 25, rue de Ponthieu, F-75008 Paris (FR)**

(54) Détecteur panoramique d'ions.

(57) La présente invention concerne un détecteur panoramique d'ions répartis spatialement en différents faisceaux.

Ce détecteur comprend un diaphragme (1) à symétrie plane, percé d'une ouverture permettant le passage des faisceaux; ce diaphragme est porté au potentiel de la terre. Une électrode (5) permet de convertir les ions en électrons; cette électrode présente le même plan de symétrie plane que le diaphragme et elle est portée à un potentiel négatif par rapport au potentiel de la terre. Le détecteur comprend également une électrode plane (9), située en regard de l'électrode de conversion et portée à un potentiel positif par rapport au potentiel de l'électrode de conversion.

Application à la détection de particules chargées.

1

La présente invention, due aux travaux de Messieurs Jean-François ELOY du Commissariat à l'Energie Atomique et Eberhard UNSÖLD de la firme "Gesellschaft für Stahler und Umweltforschung gmBH, concerne un détecteur panoramique d'ions. Ce détecteur peut être utilisé pour la détection de particules chargées, notamment en spectrographie de masse.

Pendant très longtemps, le seul détecteur de particules chargées ayant une collection panoramique, a été la plaque photographique. Ce type de détecteur présente certains avantages : une bonne résolution spatiale, qui est inférieure à 10 microns, ainsi qu'une assez bonne sensibilité de détection, qui est de l'ordre de $10^6$ ions par $mm^2$.

Ce détecteur photographique présente cependant des inconvénients importants, et notamment une grande difficulté de mise en oeuvre et d'utilisation : le développement, l'enregistrement, et les courbes de calibrage des plaques photographiques nécessitent des délais importants de mise en oeuvre.

Certains phénomènes physiques qui produisent des particules chargées ont une durée parfois très brève. L'étude de ces phénomènes nécessite dans certains cas, l'utilisation d'un détecteur de particules à réponse très rapide. Il est connu dans ce cas, d'utiliser un photomultiplicateur dont la réponse est rapide ; ce photomultiplicateur présente une

B 6321-3 DC

fenêtre de collection et de détection qui est sensible seulement à l'impact photonique direct. Il est donc nécessaire dans ce cas d'interposer un système de conversion de particules chargées-photons, entre la source d'émission de ces particules chargées et le photomultiplicateur. Ce système de conversion est généralement constitué par un scintillateur qui réalise cette conversion en un temps très bref (de l'ordre de la nanoseconde). Il en résulte que cette conversion ne modifie pas sensiblement la rapidité de réponse du photomultiplicateur, mais il est bien évident que cet agencement ne peut être utilisé que lorsque les particules à détecter sont des électrons.

Lorsque les particules chargées sont des ions positifs, par exemple, il est alors nécessaire de disposer d'un système de conversion supplémentaire permettant de transformer les ions positifs en électrons, de manière à pouvoir réaliser la transformation électrons-photons par l'intermédiaire du scintillateur précédent.

Il est connu de transformer les ions en électrons par différents moyens qui font tous appel à des techniques de réémission d'électrons par une surface bombardée par des ions positifs. Parmi ces différentes techniques, on distingue :

- le détecteur utilisant un fil électrique de conversion, qui capture les ions positifs passant dans son champ électrique attractif, puis réémet des électrons secondaires à la suite de cet impact ;

- le détecteur utilisant une plaquette de micro-canaux dont les extrémités présentent une différence de potentiel importante ; ces micro-canaux captent les ions qu'ils transforment en électrons ; ils ont en outre pour effet d'amplifier ces électrons. Une telle plaquette permet de réaliser un système convertisseur ions-électrons-photons, très rapide et de type panoramique. Dans la plaquette, les micro-canaux sont juxtaposés, la conversion ions-électrons est réalisée lorsqu'un ion à détecter vient frapper la paroi intérieure d'un canal de la plaquette. Généralement, cette plaquette de micro-canaux est disposée sous un angle d'inci-

3

dence de 20° par rapport aux faisceaux d'ions. La plaquette comporte des milliers de canaux de très faible dimension, 12 microns de diamètre par exemple. Ces canaux sont très près les uns des autres, mais, malgré cette proximité, des joints aveugles au faisceau d'ions existent entre chacun des canaux. Il en résulte, outre une perte d'informations, que la surface de conversion des ions en électrons est discontinue et qu'ainsi, il y a une perte de résolution spatiale. Les ions qui ont frappé la paroi intérieure d'un canal sont transformés en électrons, ces électrons sont multipliés en rebondissant dans le canal. Les électrons sont extraits du canal grâce à la différence de potentiel $\Delta V$ qui existe entre la face d'entrée des micro-canaux et leur face de sortie. Généralement, la face d'entrée est portée au potentiel de la terre, tandis que la face de sortie est portée à un potentiel positif de quelques kilovolts (+ 3 kV par exemple). Le coefficient d'amplification des électrons dépend en particulier de la différence de potentiel $\Delta V$ appliquée aux micro-canaux, de la position de la trajectoire de l'ion par rapport au canal correspondant, de l'intensité locale du faisceau d'ions incidents etc... La forme des trajectoires électroniques dans les canaux dépend de la différence de potentiel $\Delta V$. Le nombre de chocs entre les électrons et les parois des canaux dépend aussi de cette différence de potentiel $\Delta V$. Il en résulte que l'amplification est elle-même dépendante de $\Delta V$. Afin d'avoir une détectivité maximale, il est courant d'utiliser les plaquettes avec un coefficient d'amplification maximum ; il en résulte que les plaquettes fonctionnent à saturation et que cela consiste à détecter un ion ou plusieurs avec la même amplitude de signal. Le champ magnétique existant ne modifie pas la résolution spatiale, du fait de l'existence des canaux. Par contre, il joue un rôle essentiel dans l'amplification par suite de sa répartition spatiale non homogène et de son irreproductibilité temporelle. Un tel convertisseur à plaquettes ne permet donc pas de réaliser une conversion proportionnelle des ions en électrons. Il est cependant à remarquer qu'il présente une très grande sensibilité correspondant à un pouvoir de détection d'un ion. Générale-

B 6321-3 DC

4

ment, il est courant de placer après ce convertisseur à plaquettes, une couche phosphorescente qui permet de convertir en photons, les électrons issus des micro-canaux. Cette couche phosphorescente est portée à un potentiel positif dont la valeur absolue est plus élevée que celle de la face de sortie des micro-canaux. Après cette couche phosphorescente, des guides de lumière tels que des fibres optiques, permettent de capter les photons émis par la couche phosphorescente et de les canaliser jusqu'à une fenêtre de lecture. L'étude du spectre de photons est réalisée aux extrémités des fibres optiques. En effet, ces fibres sont disposées de manière à conserver une certaine résolution spatiale des phénomènes ioniques d'origine. La lecture du spectre est effectuée au moyen, par exemple, d'une caméra vidicon à balayage. Il est toutefois nécessaire que les faisceaux d'ions soient collectés en continu ou du moins en semi-continu, avec un taux de répétition lent à l'entrée du détecteur, afin de permettre le balayage de la caméra.

En tout état de cause, la conversion des ions en électrons n'étant pas proportionnelle, l'intensité des raies du spectre de photons obtenue ne l'est pas et l'ensemble du détecteur panoramique n'a pas une réponse proportionnelle.

Un autre détecteur connu permettant la conversion des ions en électrons suivie d'une conversion des électrons en photons, comprend des fils ou des rubans électriques qui sont portés à un potentiel négatif et qui permettent la conversion des ions en électrons. Chacun de ces fils ou de ces rubans est associé à un microscintillateur, qui permet de convertir l'électron en photon. Ce système de détection présente, comme dans le cas précédent, une surface de conversion discontinue. Il en résulte également dans ce système, qu'il y a perte de résolution spatiale dans la détection des ions. De plus, ce système nécessite une multiplicité de photomultiplicateurs ; il n'est donc guère plus avantageux que le système connu antérieurement aux détecteurs à micro-canaux, utilisant une pluralité de multiplicateurs d'électrons sans fenêtre et présentant de ce fait de grosses difficultés de mise en pratique, consécutives à l'encombrement de ces multiplicateurs.

B 6321-3 DC

0002153

5

Afin d'éliminer cette discontinuité dans la résolution spatiale des détecteurs, il est connu de réaliser une électrode de conversion à structure continue et unipolaire. Cette électrode est généralement portée à un potentiel négatif et les ions viennent la frapper, sans être préalablement accélérés dans un espace défini. Ce potentiel négatif permet d'accélérer le phénomène de capture des ions et de supprimer les phénomènes de rebondissement lors de l'impact de ces ions sur l'électrode de conversion. Les électrons secondaires qui sont émis à la suite d'impacts, sont canalisés par un champ électrique perpendiculaire au plan d'incidence des faisceaux d'ions. Ces électrons sont ensuite recueillis sur une plaque photographique, après avoir franchi un diaphragme porté au potentiel de la terre.

Un tel système, bien que permettant d'obtenir une résolution spatiale continue, ne permet pas de supprimer la plaque photographique. On peut remplacer cette plaque par un détecteur à scintillateur et photomultiplicateur, mais, en spectrographie de masse, l'utilisation d'un détecteur à multiplication et notamment, à conversion électrons-photons est rendue impossible à cause de l'encombrement des éléments de multiplication qui est incompatible avec les bobinages de création de champs magnétiques.

Un autre type de détecteur connu consiste à disposer un scintillateur en forme de disque sur le trajet d'un seul faisceau d'ions. Dans ce détecteur, le scintillateur est recouvert d'un film métallique mince. Le scintillateur n'est sensible qu'aux électrons de forte énergie et il est insensible aux ions positifs à analyser. Une électrode d'accélération présentant une ouverture est placée entre la source d'ions et le scintillateur. Cette électrode permet une conversion des ions en électrons.

Ce détecteur n'évite malheureusement pas l'entrée d'électrons ne provenant pas directement de la conversion ions-électrons et ne permet pas d'analyser spatialement plusieurs faisceaux d'ions.

B 6321-3 DC

6

La présente invention a pour but de remédier à ces inconvénients et notamment de réaliser un détecteur panoramique permettant d'effectuer une conversion des ions en électrons tout en conservant pour les faisceaux d'électrons formés, la même répartition spatiale que pour les faisceaux d'ions à analyser.

L'invention a pour objet un détecteur panoramique d'ions répartis spatialement en différents faisceaux, caractérisé en ce qu'il comprend :

- un diaphragme à symétrie plane, percé d'une ouverture permettant le passage desdits faisceaux, ce diaphragme étant porté au potentiel de la terre ;

- une électrode de conversion des ions en électrons, percée d'une ouverture située en regard de l'ouverture du diaphragme, cette électrode de conversion présentant le même plan de symétrie plane et étant portée à un potentiel négatif par rapport au potentiel de la terre ;

- une électrode plane située en regard de l'électrode de conversion et portée à un potentiel positif par rapport au potentiel de l'électrode de conversion, la face de l'électrode de conversion, située en regard de l'électrode plane ayant une forme déterminée,de manière que les faisceaux d'électrons formés conservent la même répartition spatiale que les faisceaux d'ions à détecter en présence d'un champ magnétique appliqué.

Selon des caractéristiques particulières, l'électrode de conversion est constituée dans un alliage de cuivre et de béryllium et l'électrode plane qui est située en regard de l'électrode de conversion, est disposée sur un scintillateur apte à convertir les électrons en photons.

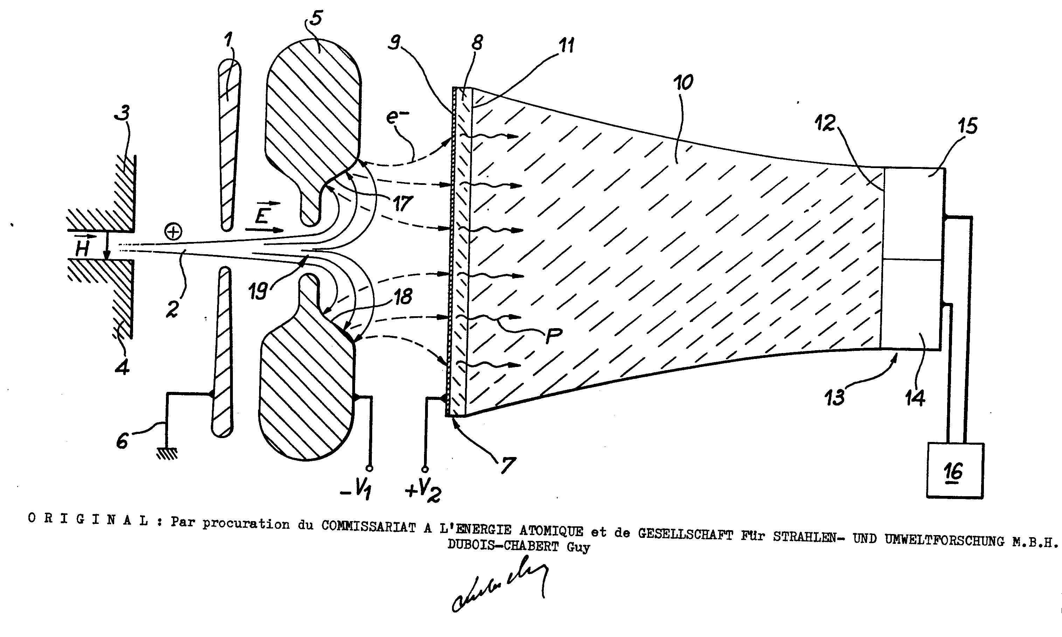

D'autres caractéristiques et avantages de l'invention ressortiront encore de la description qui va suivre, donnée en référence à la figure unique annexée représentant à titre purement illustratif, un mode de réalisation du détecteur de l'invention.

B 6321-3 DC

7

Le détecteur représenté sur cette figure est associé à un scintillateur et à des moyens de conduction des photons vers un détecteur photonique, et il peut ainsi être utilisé dans un spectrographe de masse décrit dans la demande de brevet N° 77 34271 déposée le 15.11.77 au nom du même demandeur.

En référence à la figure, le détecteur comprend un diaphragme 1, d'entrée des ions. Ces ions sont représentés sur la figure, sous forme d'un faisceau 2, émis par exemple dans un spectrographe de masse dont on a représenté seulement les pièces polaires 3 et 4 d'un électroaimant permettant d'analyser magnétiquement les ions issus d'une même source d'ions. Le champ magnétique $\vec{H}$ créé par cet électroaimant est représenté par une flèche sur la figure. Chacun des faisceaux formés d'ions de même masse est sensiblement contenu dans le plan médian des pièces polaires 3 et 4, perpendiculaire au plan de la figure. Le détecteur comprend également des moyens de conversion 5, des ions en électrons. Ces moyens de conversion ont une structure continue à symétrie plane. Le diaphragme 1 est porté au potentiel de la terre 6, tandis que les moyens de conversion 5, des ions en électrons, sont portés à un potentiel négatif par rapport au potentiel de la terre. Ces moyens de conversion des ions en électrons ont la forme d'électrodes planes représentées dans un alliage de cuivre et de béryllium. Le champ électrique $\vec{E}$ entre le diaphragme et ces électrodes est de direction générale parallèle au faisceau d'ions. Son intensité est telle que les ions passent entre les bords des électrodes ; ces ions viennent frapper les faces des électrodes en regard d'une électrode plane 9, portée à un potentiel positif par rapport à la terre. Cette électrode 9 est disposée sur un scintillateur 7 permettant une conversion des électrons en photons. Le scintillateur 7 a une structure plane et il comprend un support plastique 8 recouvert d'une très fine couche 9 d'aluminium, située en regard des électrodes 5 de conversion appartenant au détecteur panoramique. Cette couche constitue l'électrode plane portée à un potentiel positif $V_2$

8

par rapport au potentiel de la terre. A titre d'exemple, le potentiel négatif $V_1$ auquel sont portées les électrodes des moyens de conversion des ions en électrons, est de l'ordre de 5 à 15 KV. Le potentiel positif $V_2$ auquel est porté le scintillateur est de l'ordre de + 10 à + 20 KV. La couche mince 9 d'aluminium qui recouvre le support plastique 8 a une épaisseur qui est inférieure ou égale à 200 Å.

Dans l'exemple décrit, le support plastique 8 du scintillateur 7 se trouve en regard de moyens 10, de conduction des photons émis par le scintillateur 7. Lorsque le détecteur est destiné au spectrographe de masse objet de la demande de brevet précitée, ces moyens de conduction des photons ont une structure monobloc, et sont par exemple constitués dans une résine synthétique incolore et transparente. Cette résine synthétique est un polymère de méthacrylate de méthyle plus connu sous la dénomination commerciale de plexiglass. Leur face d'entrée 11, est située en regard du scintillateur, tandis que leur face de sortie 12 est située en regard d'un détecteur photonique 13. Dans l'exemple décrit, le détecteur photonique 13 est constitué par deux photo-multiplicateurs 14 et 15, l'un de gain peu élevé, l'autre de très haut gain permettant de traiter le premier les ions correspondant aux raies peu intenses, le second aux raies intenses. Les signaux de sortie des photomultiplicateurs sont appliqués à des moyens 16 de visualisation du spectre de photons. Ces moyens de visualisation peuvent être, soit un oscilloscope à tube cathodique, soit un convertisseur analogique digital à affichage.

Les moyens 10 de conduction des photons, à structure monobloc, qui permettent de transmettre les photons du scintillateur au photomultiplicateur ont une forme convergente en direction des photomultiplicateurs.

Ainsi, grâce au détecteur de l'invention, la conversion des ions en électrons, se fait de manière continue. Il n'y a pas de discontinuité spatiale dans la détection des ions. Dans l'exemple d'application décrit, il n'y a pas non

B 6321-3 DC

plus de discontinuité spatiale dans la détection des photons.

Les ions à collecter et à détecter sont post-accélérés par un champ électrique $\vec{E}$ appliqué entre le diaphragme et l'électrode de conversion des ions en électrons, de manière à introduire ces ions, seulement dans l'espace de séparation ions-électrons. Lorsque les ions parviennent dans cet espace, ils sont ralentis et défléchis, de façon à venir frapper avec une grande énergie cinétique la surface de l'électrode de conversion, du côté qui est situé en regard du scintillateur 7. Cette trajectoire est bien entendu obtenue grâce à l'application d'un potentiel négatif par rapport à la terre sur l'électrode 5 et à l'application d'un potentiel positif par rapport à la terre sur l'électrode 9. Les ions qui frappent la surface de l'électrode de conversion ions-électrons, avec une certaine énergie cinétique, arrachent les électrons secondaires à cette électrode ; ces électrons secondaires sont accélérés et viennent frapper le scintillateur. Les impacts de ces électrons secondaires produisent dans le scintillateur des phénomènes de scintillation, desquels résultent des émissions de photons.

Les bords 17, 18 de l'ouverture 19 que présentent les électrodes de conversion et qui sont situés en regard de l'électrode 9, ont une forme concave, de manière que grâce au champ électrique créé entre ces électrodes de conversion et l'électrode plane 9, la répartition spatiale de chaque faisceau d'électrons corresponde à la répartition spatiale de chaque faisceau d'ions, à l'entrée du détecteur. Les électrons, en sortie de l'électrode de conversion sont soumis au champ magnétique $\vec{H}$ dont les lignes de champ s'étendent jusqu'à cette zone, puis accélérés par un champ électrique, en direction de l'électrode du scintillateur. Les lignes de champ électrique à la sortie de l'électrode de conversion ont une direction telle qu'elles permettent au champ magnétique $\vec{H}$ de regrouper selon des trajectoires parallèles, les électrons émis initialement dans toutes les directions. Il en résulte que les électrons correspondant à un faisceau d'ions donné présentent une dispersion minimale dans le sens perpendiculaire au plan de la figure.

Les moyens 10 de conduction de photons ont leur face 11 directement en contact avec le support plastique du scintillateur, sur une surface équivalente à celle des électrodes de conversion des ions en électrons. Les photons émis par le scintillateur sont canalisés et vont converger sur une fenêtre d'ouverture appropriée de chacun des photomultiplicateurs 14, 15, de manière à permettre la lecture de toutes les informations lumineuses, grâce aux moyens de visualisation 16 liés à ce détecteur photonique. Le guide de lumière 10 de structure monobloc permet un mélange spatial de toutes les informations photoniques ; il en résulte qu'il est possible de lire simultanément des informations photoniques grâce à un ou à plusieurs photomultiplicateurs de gains différents, tels que 14, 15, disposés sur le même guide de lumière.

Le détecteur qui vient d'être décrit a pour avantage de fournir une réponse analytique très rapide. En spectrographie de masse, ce détecteur permet une interprétation simplifiée du spectre de masse. L'exactitude des résultats est sensiblement améliorée ; en effet, les électrons émis lors de la première conversion ne revenant pas frapper l'électrode de conversion ion-électrons, ce détecteur, appliqué à un spectrographe de masse, ne présente pas le risque de saturation, préservé dans le cas des détecteurs à canaux multiples décrits plus haut. De plus, le détecteur de l'invention a une limite de détection qui est environ mille fois plus grande que celle d'un détecteur photographique.

On remarquera que la forme des faces aval 17, 18 des électrodes 5 de conversion est orthogonale aux lignes de champ magnétique auquel ces électrodes sont soumises ; ainsi les lignes de champ électrique et les lignes de champ magnétique sont colinéaires, la force magnétique est faible par rapport à la force électrostatique et la dispersion minimale ; la forme des faces amont des électrodes de conversion, est sensiblement la même que celle des faces aval. Cette forme permet une focalisation des ions entre les lèvres de l'électrode de conversion.

B 6321-3 DC

11

Il peut être avantageux de disposer autour du détecteur un blindage magnétique permettant de réduire dans une première étape l'effet de dispersion des électrons, le détecteur selon l'invention n'ayant plus alors qu'à supprimer l'effet résiduel ;

De plus, la tension appliquée entre diaphragme et électrode de conversion permet d'éviter que des électrons ne résultant pas de la conversion des ions en électrons viennent se mélanger aux électrons résultant de cette conversion et créent ainsi des informations parasites.

Cette disposition (et l'avantage qui en résulte) n'est pas limitée à l'application aux détecteurs d'ions sensibles à une pluralité de faisceaux d'ions ; elle peut s'appliquer à un mono-détecteur : dans ce cas, le diaphragme et l'électrode de conversion sont à orifice circulaire, l'électrode et le scintillateur ayant par exemple la forme générale de disques.

Le détecteur panoramique de l'invention peut être appliqué à un spectrographe de masse à séparation spatiale et à mesure de temps de vol. La conservation de la répartition spatiale des faisceaux d'ions et des faisceaux d'électrons secondaires est indispensable dans de tels spectrographes. En effet, dans les spectrographes faisant intervenir des mesures de temps de vol, tel que le spectrographe décrit dans la demande de brevet précitée, si l'on ne met pas en oeuvre le détecteur de l'invention, les trajectoires des électrons réémis par l'électrode à émission secondaire, seront très différentes selon la vitesse initiale de ces électrons, donc les temps mis par ces électrons pour aboutir au scintillateur seront très différents ; il en résultera un élargissement des impulsions électroniques correspondant à une masse donnée et donc un manque de résolution temporelle.

Il est bien évident que dans le détecteur qui vient d'être décrit, les moyens utilisés auraient pu être remplacés par des moyens équivalents, sans sortir du cadre de l'invention. Par exemple, dans le détecteur panoramique, les moyens de conduction des photons, qui ont été choisis de manière à

B 6321-3 DC

12

présenter une structure monobloc, pourraient être remplacés par une pluralité de fibres optiques par exemple. Cette structure est applicable au spectrographe de masse décrit dans la demande de brevet précitée, bien que dans ce cas, la séparation spatiale des faisceaux lumineux soit inutile ; si l'on utilise une pluralité de photomultiplicateurs de gains différents, il faut que chaque zone du scintillateur correspondant à un faisceau d'ions de masse donnée, soit réunie à la face d'entrée de chacun des photomultiplicateurs.

0002153

13

## REVENDICATIONS

1. Détecteur panoramique d'ions répartis spatialement en différents faisceaux, caractérisé en ce qu'il comprend :

- un diaphragme à symétrie plane, percé d'une ouverture permettant le passage desdits faisceaux, ce diaphragme étant porté au potentiel de la terre ;

- une électrode de conversion des ions en électrons, percée d'une ouverture située en regard de l'ouverture du diaphragme, cette électrode de conversion présentant le même plan de symétrie plane et étant portée à un potentiel négatif par rapport au potentiel de la terre ;

- une électrode plane située en regard de l'électrode de conversion et portée à un potentiel positif par rapport au potentiel de l'électrode de conversion, la face de l'électrode de conversion, située en regard de l'électrode plane ayant une forme déterminée, de manière que les faisceaux d'électrons formés conservent la même répartition spatiale que les faisceaux d'ions à détecter en présence d'un champ magnétique appliqué.

2. Détecteur selon la revendication 1, caractérisé en ce que l'électrode de conversion est constituée dans un alliage de cuivre et de béryllium.

3. Détecteur selon la revendication 1, caractérisé en ce qu'il comporte des moyens de traitement différentiel des signaux électriques émis dans les différentes zones de l'électrode de conversion, juxtaposées le long de la direction du plan de symétrie.

4. Détecteur selon la revendication 3, caractérisé en ce que lesdits moyens de traitement comportent un scintillateur et une pluralité de conduits de lumière associés chacun à l'une des différentes zones du scintillateur, juxtaposées le long de la direction du plan de symétrie.

5. Détecteur selon la revendication 4, caractérisé en ce que lesdits moyens de traitement comportent en outre une pluralité de photomultiplicateurs associés chacun à l'un des conduits de lumière.

B 6321-3 DC

14

6. Détecteur selon la revendication 1, caractérisé en ce qu'il comporte des moyens de traitement de temps des signaux électro-optiques émis par l'électrode de conversion.

7. Détecteur selon la revendication 6, caractérisé en ce que lesdits moyens de traitement comportent un scintillateur et un conduit de lumière associé à l'ensemble du scintillateur.

8. Détecteur selon la revendication 7, caractérisé en ce .que lesdits moyens de traitement comportent au moins un photomultiplicateur associé audit conduit de lumière.

O R I G I N A L : Par procuration du :
COMMISSARIAT A L'ENERGIE ATOMIQUE et de
GESELLSCHAFT Für STRAHLEN- UND UMWELTFORSCHUNG M.B.H.
DUBOIS-CHABERT Guy

B 6321-3 DC

0002153

**Office européen des brevets**

**RAPPORT DE RECHERCHE EUROPEENNE**

Numéro de la demande

EP 78 40 0175

| | DOCUMENTS CONSIDERES COMME PERTINENTS | | CLASSEMENT DE LA DEMANDE (Int. Cl.²) |
|---|---|---|---|
| Catégorie | Citation du document avec indication, en cas de besoin, des parties pertinentes | Revendication concernee | G 01 T 1/28 |
| | US - A - 3 538 328 (Y.E. STRAUSSER) <br> * Figure 1 * <br><br>-- | 1,7,8 | H 01 J 39/36 |
| | US - A - 3 916 187 (J.C. FLETCHER) <br> * Colonne 8, ligne 17 à colonne 9, ligne 46; figure 4 * <br><br>-- | 1,7,8 | |
| | DE - A - 2 534 796 (MAX PLANCK GESELLSCHAFT ZUR FOERDERUNG DER WISSENSCHAFTEN) <br> * Page 5, lignes 25-29; figure * <br><br>-- | 2 | DOMAINES TECHNIQUES RECHERCHES (Int. Cl.²) <br><br> G 01 T 1/28 <br> H 01 J 39/36 |
| | GB - A - 1 412 849 (ASSOCIATED ELECTRICAL INDUSTRIES) <br> * Revendications 1,3,5,7 * <br><br>---- | 3-5 | |

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 15-02-1979 | ARMSPACH |

OEB Form 1503.1 06.78